# DEMANDE DE BREVET EUROPEEN

(11) **EP 0 798 243 A1**
(43) Date de publication de la demande: **01.10.1997**
(21) Numéro de dépôt: 96400681.1
(22) Date de dépôt: 29.03.1996
(51) Int. Cl.: B65G 51/32

(54) **Unité d'émission et/ou de réception pour convoyeur pneumatique**

(71) Demandeur: FLUIDELEC, 78532 Buc Cedex (FR)
(72) Inventeur: Douard, Pierre-René, 78960 Voisins le Bretonneux (FR); Moro, Giovanni, 94500 Champigny (FR)
(74) Mandataire: de Saint-Palais, Arnaud Marie

(57) **Abrégé**

L'unité d'émission et/ou de réception selon l'invention comprend un tronçon de décélération (15) qui prolonge le conduit tubulaire (16) du convoyeur pneumatique et qui est terminé par un obturateur (17) et, en parallèle sur ce tronçon (15), une boucle de circulation forcée d'air (18) comprenant un générateur de pression/dépression (20) dont l'admission (21) peut être mise en communication soit avec l'extérieur, soit avec le conduit (16) au niveau de sa jonction avec le tronçon (15), grâce à un registre (22), et dont la sortie de refoulement (23) peut être mise en communication soit avec l'extérieur, soit avec le tronçon de décélération (15), au voisinage de l'obturateur (17).

L'invention est particulièrement adaptée à des cartouches souples servant à contenir les charges à transporter.

## Description

La présente invention concerne une unité d'émission et/ou de réception de convoyeur pneumatique destiné au transport de faibles charges, tels que, par exemple, des documents ou de la monnaie, entre des lieux faiblement éloignés, par exemple à l'intérieur d'un même bâtiment.

On sait que de tels convoyeurs font intervenir un conduit tubulaire étanche habituellement cylindrique dans lequel peuvent circuler des cartouches renfermant les charges à transmettre. Chaque cartouche peut être propulsée dans le tube grâce à une différence de pression engendrée de part et d'autre de la cartouche, par exemple au moyen d'une source de gaz sous pression ou d'un dispositif d'aspiration connecté à une extrémité du conduit.

Jusqu'ici, les cartouches de forme cylindrique étaient réalisées en un matériau relativement rigide. Elles comprenaient deux joints d'étanchéité annulaires disposés à chacune de leurs extrémités et conçus de manière à venir en contact étanche avec les parois du tube.

Les unités de réception utilisées dans ces convoyeurs faisaient alors intervenir un ensemble comprenant :
- un tronçon de décélération prévu à l'extrémité du conduit,
- un obturateur situé à l'extrémité libre dudit troncon,
- des orifices calibrés de passage d'air ménagés dans le tronçon, à proximité de l'obturateur, et
- un conduit d'aspiration ou de mise à l'air libre connecté au conduit au niveau de sa jonction avec le tronçon de décélération.

Grâce à ces dispositions, la cartouche qui se trouve propulsée grâce à la différence de pression amont/aval, s'engage à grande vitesse dans la chambre de décélération, en comprimant le gaz qu'elle contient. Sous l'effet de la pression résistante qu'elle subit du fait de cette compression, la cartouche se trouve freinée et subit donc une décélération. Parallèlement, l'air comprimé s'échappe par les perçages calibrés de sorte qu'à l'issue de la course de décélération, la cartouche vient s'immobiliser sur l'obturateur, pratiquement sans choc, la pression du volume d'air compris entre l'obturateur et la cartouche étant revenue à la pression atmosphérique.

L'obturateur peut alors être ouvert pour pouvoir retirer la cartouche.

Il s'avère que pour éviter les multiples inconvénients des cartouches rigides (encombrement, coût, durée de vie, usure, blocage dans les courbes), on a proposé, notamment par la demande de brevet FR No 94 14259, déposée le 25 novembre 1994, au nom de la Demanderesse, une cartouche comprenant un corps tubulaire souple, une collerette souple dont un bord est raccordé de façon étanche le long d'un contour de la partie médiane dudit corps, et des moyens pour maintenir la collerette dans une configuration propre à opposer à un flux d'air une face concave. Les dimensions de cette collerette sont prévues de manière à ce qu'elle puisse couvrir, avec ledit corps, la section intérieure du tube.

Or, l'expérience montre que les unités de réception prévues pour des cartouches rigides ne conviennent pas à des cartouches souples telles que celles précédemment décrites.

Ceci tient au fait que lors de l'entrée de la cartouche dans le tronçon de décélération, sous l'effet du flux d'air engendré, la collerette se rabat contre le corps et n'assure plus sa fonction d'étanchéité entre corps et tronçon. L'air contenu dans le tronçon peut donc circuler autour du corps et n'offre qu'une faible résistance au déplacement de la cartouche. Celle-ci vient alors buter brutalement contre l'obturateur, au risque de se détériorer ainsi que son contenu.

L'invention a donc plus particulièrement pour but de supprimer cet inconvénient. Elle propose en outre de parvenir à ce résultat grâce à des dispositions simples permettant d'obtenir une unité pouvant servir à la fois à la réception et à l'émission en n'utilisant qu'un seul générateur de gaz sous pression également utilisable comme moyen d'aspiration.

A cet effet, l'unité d'émission et/ou de réception selon l'invention comprend un tronçon de décélération étanche (exempt d'orifice calibré) dont l'orifice de sortie est muni d'un obturateur permettant l'extraction des cartouches et, en parallèle, sur ce tronçon, une boucle de circulation forcée d'air comprenant un groupe propulseur générateur de pression/dépression dont l'entrée d'admission peut être mise en communication, soit avec l'extérieur, soit avec le conduit tubulaire, au niveau de sa jonction avec le tronçon de décélération, grâce à un premier registre, et dont la sortie de refoulement peut être mise en communication, soit avec l'extérieur, soit avec le tronçon de décélération, dans une région de celui-ci, adjacente à l'obturateur.

Avantageusement, cette unité d'émission et/ou de réception fait en outre intervenir un dispositif de détection de la présence des cartouches, à l'entrée du tronçon de décélération ou dans une région du conduit tubulaire adjacente audit tronçon, et des moyens de commande agissant sur les deux registres pour mettre la sortie de refoulement en communication avec le tronçon de décélération et, éventuellement, l'entrée d'aspiration en communication avec ledit conduit, de manière à engendrer, à l'intérieur du tronçon de décélération, un flux d'air en sens inverse du sens de déplacement de la cartouche, une fois que cette dernière a été détectée par le susdit dispositif de détection.

Une particularité de l'unité précédemment décrite consiste en ce qu'elle peut fonctionner non seulement en mode réception, de la façon précédemment décrite, mais également en mode émission, sans nécessiter l'usage de deux groupes propulseurs distincts : grâce aux deux registres, en mode émission, la sortie du groupe propulseur est mise en communication avec le tronçon de décélération au niveau de l'obturateur, tandis que son entrée est mise à l'atmosphère. La cartouche engagée dans le tronçon se trouve donc propulsée dans le conduit tubulaire par le flux d'air produit par le groupe propulseur.

Des modes d'exécution de l'invention seront décrits ci-après, à titre d'exemples non limitatifs, avec référence aux dessins annexés dans lesquels :
Les figures 1 et 2 sont des représentations schématiques illustrant le principe de fonctionnement d'une unité de réception classique ;
Les figures 3 à 5 sont des représentations schématiques d'une unité d'émission/réception selon l'invention lors d'un processus de réception, avant la phase de décélération (figure 3), pendant la phase de décélération (figure 4), et en mode émission (figure 5) ;
La figure 6 est une coupe axiale schématique d'un registre trois voies, deux positions, utilisable dans l'unité d'émission/réception précédemment décrite.

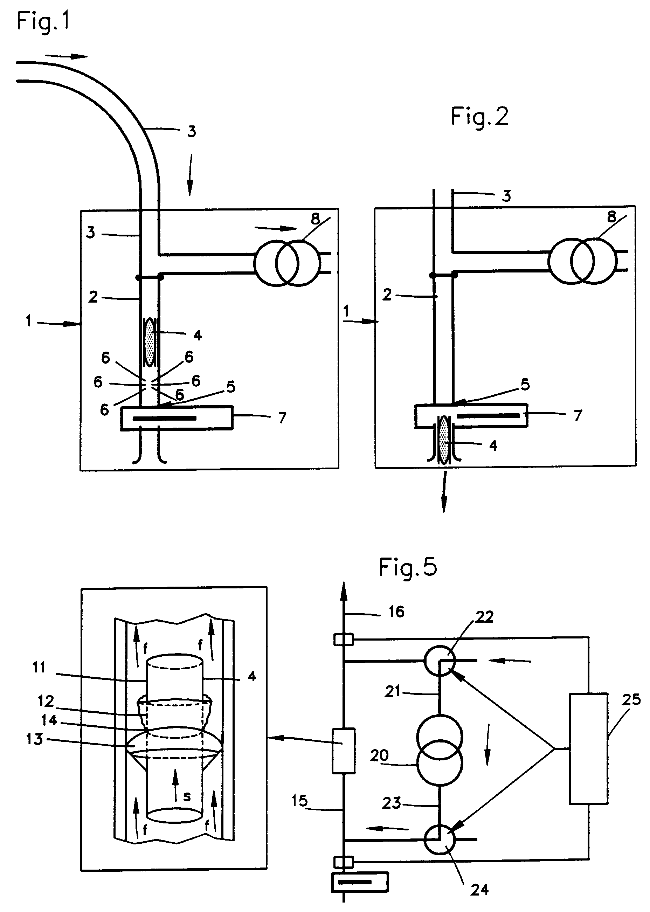

L'unité de réception 1 représentée sur les figures 1 et 2 comprend, de façon classique, un tronçon de décélération 2 prolongeant le conduit tubulaire 3 dans lequel se trouve propulsée la cartouche 4 contenant la charge à transmettre. L'extrémité 5 de ce tronçon 2, qui présente une pluralité d'orifices calibrés 6, est munie d'un obturateur 7 contre lequel la cartouche 4 vient en butée en fin de course de freinage. Une fois ouvert, cet obturateur 7 permet ensuite l'extraction (par exemple par gravité) de ladite cartouche 4. Cette unité de réception 1 fait en outre intervenir un groupe générateur de dépression 8 dont l'entrée d'aspiration est connectée au conduit tubulaire 3 au niveau de sa jonction avec le tronçon de décélération 2.

Le fonctionnement de cette unité de réception 1 est alors le suivant :

Lorsque la cartouche 4, propulsée dans le conduit tubulaire 3 grâce à la dépression engendrée par le groupe 8, s'engage dans le tronçon de décélération 2 sous l'effet de son inertie et, éventuellement, de son poids, elle provoque une compression de l'air contenu dans le tronçon 2. La cartouche 4 est alors soumise à une force résistante exercée par l'air comprimé et subit une décélération. Parallèlement, l'air comprimé s'échappe par les orifices calibrés 6, de sorte que la pression du gaz décroît en même temps que la vitesse de la cartouche. Les dimensions du tronçon 2 et des trous calibrés 6 peuvent être déterminées de manière à ce que cette pression retourne à la pression atmosphérique et que, parallèlement, la vitesse de la cartouche s'annule, au moment où celle-ci parvient au niveau de l'obturateur 7.

Il est clair que ce fonctionnement ne convient que dans le cas où la cartouche 4, de forme cylindrique, est rigide et comprend des joints d'étanchéité annulaires coaxiaux, en contact étanche avec la paroi intérieure du conduit tubulaire 3 et du tronçon de décélération 2.

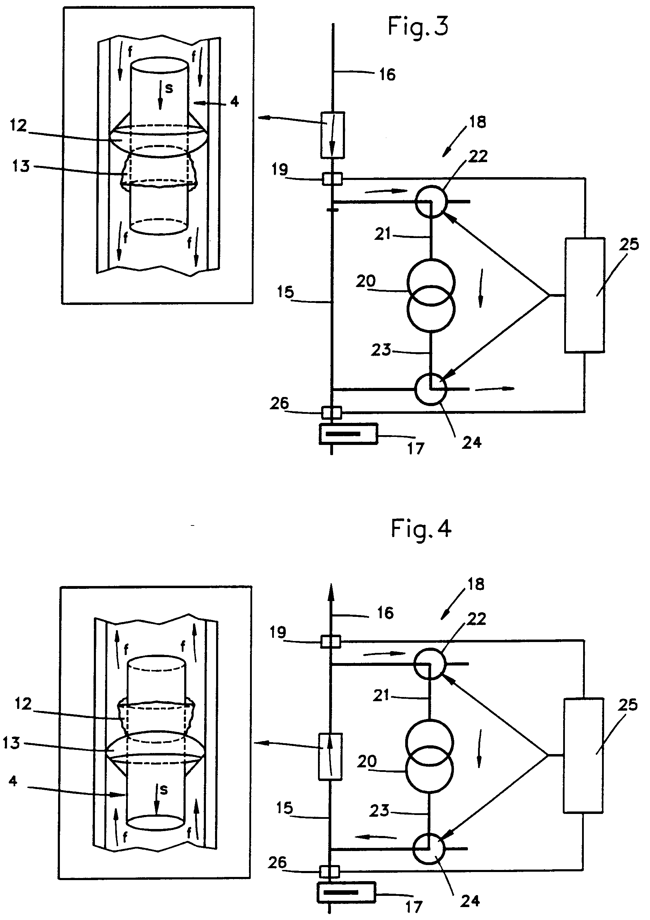

Par contre, une telle unité de réception 1 ne convient pas dans le cas d'une cartouche du type de celle représentée sur les figures 3 à 5 qui comprend un corps tubulaire souple 11 muni de deux collerettes 12, 13 identiques, présentant chacune un bord raccordé, de façon étanche, le long d'un contour 14 de la partie médiane du corps 11 et qui s'étendent de part et d'autre du plan passant par ledit contour 14.

En effet, à l'intérieur du conduit tubulaire 3, la collerette 12 dont la concavité est orientée dans le sens du flux d'air engendré par le groupe 8, se déploie de la façon indiquée figure 3 et s'applique contre la face intérieure du conduit 3 en assurant ainsi une étanchéité autoclave entre les parties amont et aval du tube séparées par la cartouche 4. La collerette 13, qui est alors repliée aléatoirement autour du corps 11, ne participe pas à l'étanchéité. La cartouche 4 se trouve donc propulsée dans le sens du flux d'air.

Toutefois, lorsque la cartouche 4 pénètre dans le tronçon de décélération 2, la collerette 12, qui se trouve soumise à une pression exercée en sens inverse, se rabat contre le corps 11 en laissant le passage à l'air déplacé par la cartouche 4. Ce flux d'air ne s'avère pas suffisant pour déployer la collerette 13 qui, elle non plus, n'assure pas son rôle de garniture d'étanchéité.

De ce fait, la cartouche 4, qui n'est pas suffisamment décélérée, vient buter brutalement contre l'obturateur 7, ce qui est inadmissible.

Comme précédemment mentionné, l'invention résout ce problème au moyen d'une unité d'émission/réception telle que celle qui est illustrée sur les figures 3 à 5 et qui comprend :
- un tronçon de décélération 15, sans orifice calibré, qui prolonge le conduit tubulaire 16 et se termine par un obturateur 17 servant à l'extraction et, éventuellement, l'introduction des cartouches,
- une boucle de circulation d'air 18 montée en parallèle sur le tronçon de décélération 15, et
- un dispositif de détection de présence 19 d'une cartouche dans le tronçon de décélération 15 ou légèrement en amont de celui-ci.

La boucle de circulation d'air 18 se compose d'un groupe propulseur générateur de pression/dépression 20 dont l'entrée d'aspiration 21 est raccordée au conduit tubulaire 16 sensiblement au niveau de sa jonction avec le tronçon de décélération 15, par l'intermédiaire d'un premier registre 22 et dont la sortie de refoulement 23 est raccordée à l'extrémité du tronçon de décélération 15, au voisinage de l'obturateur 17, par l'intermédiaire d'un second registre 24.

Les registres 22, 24 sont de type trois voies, deux positions. Ils permettent de connecter respectivement l'entrée 21 ou la sortie 23 du générateur 20, soit à l'extérieur, soit au conduit 16 ou au tronçon de décélération 15 auquel ils se trouvent respectivement raccordés. La commande des registres 22, 24 est assurée par un circuit de commande 25 recevant les informations délivrées par le capteur 19, et ce, de la façon suivante :

Lors d'une phase de transmission d'une cartouche 4 vers l'unité d'émission/réception, le registre 22 est commuté de manière à connecter l'entrée d'aspiration 21 du générateur 20 au conduit tubulaire 16 de manière à engendrer un courant d'aspiration à l'intérieur de celui-ci.

Sous l'effet de ce courant d'aspiration, la collerette 12 située en aval (par rapport au sens de déplacement) est en position déployée et assure la fonction d'étanchéité nécessaire pour la propulsion, tandis que la collerette amont 13 est repliée aléatoirement (figure 3). La cartouche 4 se trouve donc "aspirée" vers le groupe 20, à une vitesse pouvant atteindre par exemple la vitesse de 7 m/s.

Lorsque la cartouche 4 est détectée par le détecteur 19 au voisinage du tronçon de décélération 15, le système de commande 25 provoque un actionnement des registres 22, 24 de manière à mettre la sortie de refoulement 23 du générateur 20 en communication avec le tronçon de décélération 15. On obtient ainsi une circulation d'air en boucle fermée dans le circuit formé par la boucle de circulation 18 et le tronçon de décélération 15. De ce fait, à l'intérieur du tronçon de décélération 15, la cartouche est soumise à un flux d'air important f en sens inverse de son sens de déplacement (flèche S). Sous l'effet de ce flux d'air f, la collerette 13 se déploie en assurant sa fonction d'étanchéité, tandis que la collerette 12 retourne à une position repliée autour du corps 11 (figure 4).

Bien entendu, le débit et la pression du flux d'air engendré est alors réglé de manière à assurer à la cartouche 4 un ralentissement progressif jusqu'à ce qu'elle s'immobilise au voisinage de l'obturateur 17. Un deuxième détecteur de présence 26 disposé au voisinage de l'obturateur 7 peut alors interrompre l'action du générateur 20.

Pour passer en mode émission, dans un premier temps, les registres 22, 24 sont maintenus dans la position représentée figure 3, tandis que le conduit 16 est momentanément obturé, par exemple par un registre placé à son autre extrémité.

Sous l'effet de l'aspiration produite du fait de l'ouverture de l'obturateur 17, la cartouche 4 se trouve propulsée dans le tronçon de décélération 15, en direction du conduit 16.

La détection de la cartouche 4 par le détecteur 26 provoque ensuite la commutation des registres 22 et 24 dans la position qu'ils occupent sur la figure 4.

Dans cette position, l'entrée d'aspiration 21 est connectée à l'atmosphère extérieure, tandis que la sortie de refoulement 23 est connectée au tronçon de décélération 15, au voisinage de l'obturateur 17 qui entre temps s'est refermé.

Sous l'effet du flux d'air f ainsi engendré dans le tronçon 15, de même que dans le conduit tubulaire 16, la collerette 13 de la cartouche 4 se maintient à l'état déployé et continue à assurer sa fonction d'étanchéité. De ce fait, la cartouche 4 se trouve propulsée vers sa destination.

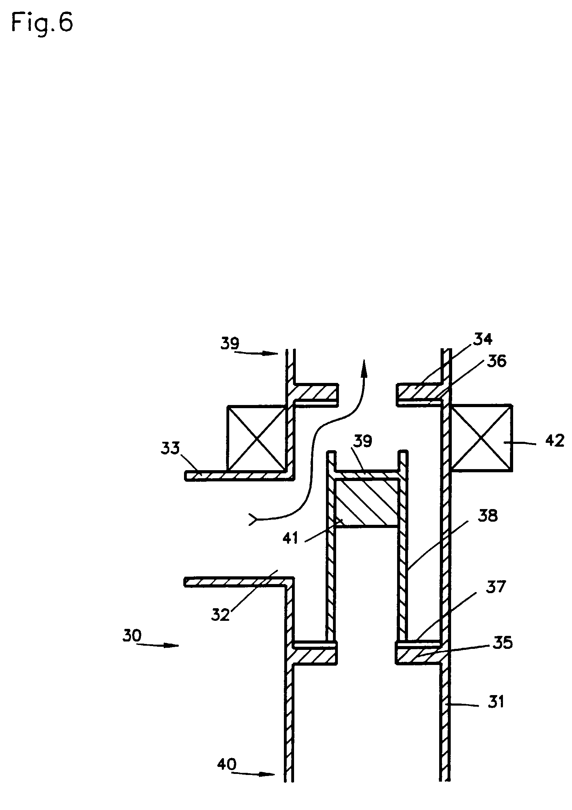

Les registres 22, 24 utilisés dans l'unité d'émission/réception précédemment décrite peuvent avantageusement présenter une structure telle que celle qui est représentée sur la figure 6.

Dans cet exemple, le registre 30 comprend un corps présentant la forme d'un raccord en T comprenant une partie tubulaire 31 munie d'une ouverture latérale 32 dont le bord est prolongé par un manchon tubulaire transversal 33.

La paroi intérieure de la partie tubulaire 31 (cylindrique) comprend deux protubérances annulaires coaxiales 34, 35 disposées de part et d'autre de l'ouverture 32. Les faces en regard de ces deux protubérances annulaires qui constituent des portées d'étanchéité sont munies de deux garnitures d'étanchéité respectives 36, 37 par exemple en élastomère.

A l'intérieur du volume cylindrique compris entre les deux protubérances annulaires 34, 35 est disposé un obturateur tubulaire 38 fermé par un opercule 39. Cet obturateur 38 présente un diamètre intérieur inférieur au diamètre intérieur de la partie tubulaire 31 mais supérieur au diamètre intérieur des protubérances 34, 35. Il est mobile axialement et peut être actionné par un électroaimant au moins partiellement logé dans la partie tubulaire 31.

Sous l'action de cet électroaimant, l'obturateur 38 peut prendre deux positions, à savoir :
- une première position dans laquelle il vient en appui contre la protubérance 35 et obture de façon étanche le passage délimité au niveau de cette protubérance 35 : dans ce cas, il autorise le passage d'un flux d'air entre le manchon transversal 33 et l'extrémité 39 de la partie cylindrique, et
- une deuxième position dans laquelle il vient en appui contre la protubérance 34 et obture de façon étanche le passage délimité au niveau de cette protubérance 34 : dans cette position, il autorise le passage d'un flux d'air entre le manchon transversal 33 et l'extrémité 40 de la partie cylindrique 31.

Avantageusement, l'armature mobile 41 de l'électroaimant pourra faire corps ou être solidarisée au susdit opercule 39. La bobine 42 de l'électroaimant pourra être disposée autour de la partie tubulaire 31 (à l'extérieur de celle-ci).

## Revendications

1. Unité d'émission et/ou de réception pour un convoyeur pneumatique servant au transport de charges disposées dans des cartouches (4), ledit convoyeur comprenant un conduit tubulaire (16) dans lequel les cartouches (4) peuvent circuler en obturant, de façon étanche, ledit conduit, la propulsion des cartouches (4) étant obtenue grâce à des moyens (20) permettant d'engendrer une différence de pression de part et d'autre desdites cartouches (4), ladite unité comprenant en outre un tronçon de décélération (15) terminé par un obturateur (17), ce tronçon permettant aux cartouches (4) d'être freinées avant de venir s'immobiliser au niveau de l'obturateur (17),
caractérisée en ce qu'elle comprend, en parallèle sur ledit tronçon (15), une boucle de circulation forcée d'air (18) comprenant un groupe propulseur générateur de pression/dépression (20) dont l'entrée d'admission (21) peut être mise en communication soit avec l'extérieur, soit avec le conduit tubulaire (16), au niveau de sa jonction avec le tronçon de décélération (15) grâce à un premier registre (22), et dont la sortie de refoulement (23) peut être mise en communication soit avec l'extérieur, soit avec le tronçon de décélération (15), dans une région de celui-ci, adjacente à l'obturateur (17).

2. Unité selon la revendication 1,
caractérisée en ce qu'elle comprend en outre un premier dispositif de détection (19) de la présence des cartouches (4) à l'entrée du tronçon de décélération (15) ou dans une région du conduit tubulaire (16) adjacente audit tronçon (15), et des moyens de commande (25) agissant sur les susdits registres (22, 24) pour mettre la sortie de refoulement (23) en communication avec le tronçon de décélération (15) et, éventuellement, pour mettre l'entrée d'aspiration (21) en communication avec ledit conduit (16), de manière à engendrer, à l'intérieur du tronçon de décélération (15) un flux d'air en sens inverse du sens de déplacement (S) de la cartouche (4) une fois que cette dernière a été détectée par ledit dispositif de détection (19).

3. Unité selon l'une des revendications 1 et 2,
caractérisée en ce qu'elle comprend un deuxième dispositif de détection (26) placé au voisinage de l'obturateur (17) pour interrompre l'action du générateur (20) lors de la détection d'une cartouche (4).

4. Unité selon l'une des revendications précédentes,
caractérisée en ce que les susdites cartouches (4) sont du type comprenant un corps tubulaire souple (11) muni de deux collerettes (12, 13) identiques présentant chacune un bord raccordé, de façon étanche, le long d'un contour (14) de la partie médiane du corps (11) et qui s'étendent de part et d'autre du plan passant par ledit contour (14).

5. Unité selon l'une des revendications précédentes,
caractérisée en ce que les susdits registres (22, 24) sont de type trois voies, deux positions.

6. Unité selon la revendication 5,
caractérisée en ce que les susdits registres (22, 24) comprennent chacun un corps présentant la forme d'un raccord en T comprenant une partie tubulaire (31) munie d'une ouverture latérale (32) dont le bord est prolongé par un manchon tubulaire transversal (33), en ce que la paroi intérieure de la partie tubulaire (31) comprend deux protubérances annulaires coaxiales (34, 35) disposées de part et d'autre de l'ouverture (32), les deux faces en regard de ces deux protubérances (34, 35) constituant des portées d'étanchéité, et en ce qu'à l'intérieur du volume compris entre les deux protubérances (34, 35) est disposé un obturateur tubulaire (38) de diamètre extérieur inférieur au diamètre intérieur de ladite partie tubulaire (31) mais supérieur au diamètre intérieur desdites protubérances (34, 35), cet obturateur (38) étant actionné par un électroaimant (41, 42) au moins partiellement logé dans l'obturateur (38) de manière à venir s'appliquer de façon étanche contre l'une ou l'autre desdites portées d'étanchéité.

7. Unité selon la revendication 6,
caractérisée en ce que l'armature mobile de l'électroaimant (41) fait corps ou est solidarisée avec un opercule (39) dudit obturateur (38).

8. Unité selon la revendication 7,
caractérisée en ce que la bobine de l'électroaimant (42) est disposée autour de la partie tubulaire (31) du corps.
